Europäisches Patentamt

European Patent Office

Office européen des brevets

(11) Publication number: **0 405 747 A2**

# (12) EUROPEAN PATENT APPLICATION

(21) Application number: 90305607.5

(51) Int. Cl.⁵: **B64G 1/22**, E04F 13/08

(22) Date of filing: 23.05.90

(30) Priority: 29.06.89 GB 8914940

(43) Date of publication of application:
02.01.91 Bulletin 91/01

(84) Designated Contracting States:
DE FR GB IT NL

(71) Applicant: BRITISH AEROSPACE PLC
11 Strand
London WC2N 5JT(GB)

(72) Inventor: Turner, Robert Graham, British
Aerospace PLC.
BAe (Space Systems) Limited, PO Box 5,
Filton
Bristol BS12 7QW(GB)
Inventor: Morse, Eric Donald, British
Aerospace PLC.
BAe (Space Systems) Limited, PO Box 5,
Filton
Bristol BS12 7QW(GB)

(74) Representative: Rooney, Paul Blaise et al
British Aerospace plc Corporate IPR
Department, Headquarters P.O. Box 87
Building Q191 Royal Aerospace
Establishment
Farnborough Hants GU14 6YU(GB)

(54) A process for the attachment of second surface mirrors to a surface of a spacecraft.

(57) In a process for the attachment of second surface mirrors (1) to a surface (6) of a spacecraft, the
mirrors (1), each in the form of a tile-like sheet of
mirror (3) or mirror coated material, are applied to
the spacecraft surface (6) in batches, with each
batch being in the form of a plurality of said mirrors
(1) in closely adjacent side-by-side, edge-to-edge
and end-to-end array temporarily adhered to one
side of a removable flexible transfer sheet (2).

*Fig.5.*

# A PROCESS FOR THE ATTACHMENT OF SECOND SURFACE MIRRORS TO A SURFACE OF A SPACECRAFT

This invention relates to a process for the attachment of second surface mirrors to a surface of a spacecraft.

Second surface mirrors are tile-like sheet mirrors which are attached to a spacecraft surface to form a second or outer surface thereon. These mirrors reflect heat away from the spacecraft and thus provide thermal control for the spacecraft. To this end there must be a thermally conductive path between the mirrors and the spacecraft. Additionally there should be an electrically conductive path between the mirrors and the spacecraft which does not give rise to electrostatic discharge effects in a space environment.

Conventionally such mirrors are attached to a spacecraft surface singly by a curable adhesive loaded with an electrically conductive filler, but this technique is time consuming, expensive and prone to misalignment of the mirrors.

There is thus a need for a generally improved process for the attachment of second surface mirrors to a surface of a spacecraft which is cheaper, quicker to apply and more accurate than the conventional technique.

According to one aspect of the present invention there is provided a process for the attachment of second surface mirrors to a surface of a spacecraft, characterised in that the mirrors, each in the form of a tile-like sheet of mirror or mirror coated material, are applied to the spacecraft surface in batches, with each batch being in the form of a plurality of said mirrors in closely adjacent side-by-side, edge-to-edge and end-to-end array temporarily adhered to one side of a removable flexible transfer sheet.

According to a further aspect of the present invention there is provided a process for the attachment of second surface mirrors to a surface of a spacecraft, characterised by including the steps of cleaning an area of the spacecraft surface, applying a coating of an electrically and thermally conductive adhesive to the cleaned surface area, temporarily adhering a plurality of mirrors, each in the form of a tile-like sheet or mirror or mirror coated material, to one side of a removable flexible transfer sheet to form a closely adjacent, side-by-side, edge-to-edge and end-to-end array thereon, applying the array of mirrors directly to the adhesive coated surface with the transfer sheet facing away from the surface, applying and maintaining a vacuum over said transfer sheet for a time sufficient for the adhesive to cure, and so attach the mirrors to the surface and removing the vacuum and transfer sheet from the mirror attached surface.

Conveniently the spacecraft surface area is in the form of a panel removably attached to substantially rigid support frame. Preferably in the process of the invention subsequent to cleaning, the spacecraft surface area is coated with a primer.

Advantageously the spacecraft surface is made of Aluminium containing light metal alloy and the primer applied is Silane dissolved in petroleum naptha.

Conveniently the adhesive utilised is a low out gassing silicone rubber adhesive containing a curing agent and an electrically conductive filler.

Preferably the adhesive cures at substantially room temperature.

Advantageously the electrically conductive filler is finely divided metal powder.

Conveniently the finely divided metal powder is silver plated copper powder.

Preferably the silver plated copper powder is CHO-BOND 1029B (Registered Trade Mark) which has been washed at least once in Toluene and subsequently heated, whilst spread out, to facilitate removal of the Tolvene.

Advantageously the heating is carried out at a temperature greater than 30°C, preferably substantially 100°C, for a time in the range of from 2 to 4 hours.

Conveniently the mirrors are silvered glass or quartz sheets.

Preferably each mirror is a sheet of cerium doped glass coated on the surface thereof, which in use faces away from the spacecraft surface, with Indium Tin Oxide and coated on the opposite surface with a silvered nickel-chrome coating which extends around the glass sheet edges into contact with the Indium Tin Oxide coating.

Advantageously the flexible transfer sheet is made of plastics material, rows of strips of double sided adhesive tape having one side coated with high tack adhesive and the other side coated with low tack adhesive are adhered to the transfer sheet and the mirrors are adhered to the low tack side of the adhesive tape in the desired array.

Conveniently the Indium Tin Oxide coated surfaces of the mirrors are adhered to the adhesive tape.

Preferably the surfaces of the mirrors facing away from the transfer sheet are coated with a primer.

Advantageously the primer utilised is Silane dissolved in petroleum naptha.

Preferably, after cleaning and priming, the adhesive is applied to the spacecraft surface by spreading to a desired thickness using wires having the same diameter as the desired thickness held in a frame.

Conveniently the transfer sheet is applied to the adhesive coated spacecraft surface until the primer coated surfaces of the errors contact the adhesive, a vacuum mat is placed over the transfer sheet and a vacuum in the range of from 999 to 965 mbar is applied to the vacuum mat for at least 45 minutes.

Preferably after 45 minutes the vacuum is reduced to substantially 950 mbar and the vacuum mat removed from the transfer sheet.

Advantageously approximately 2 hours after vacuum mat removal, the transfer sheet and double sided adhesive tape are removed from the mirrors and excess adhesive removed.

Conveniently the mirror surfaces facing away from the spacecraft surface are cleaned and polished after the adhesive has been cured for approximately 7 days at a temperature in the range of from 20 to 25°C.

Preferably a plurality of mirror arrays are attached to the spacecraft surface by a plurality of transfer sheets.

For a better understanding of the present invention, and to show how the same may be carried into effect, reference will now be made, by way of example, to the accompanying drawing, in which:-

Figure 1 is a schematic perspective view of a mirror for use with the attachment process of the present invention,

Figure 2 is an end view of a panel to which mirrors are to be applied by the process of the invention and illustrating a step in the process,

Figure 3 is an end view of an array of mirrors, attached to a transfer sheet, to be applied to the panel by the process of the invention and illustrating a further step in the process,

Figure 4 is an end view of the mirrors being applied to the panel by the process of the invention, and

Figure 5 is an end view of the mirrors applied to the panel.

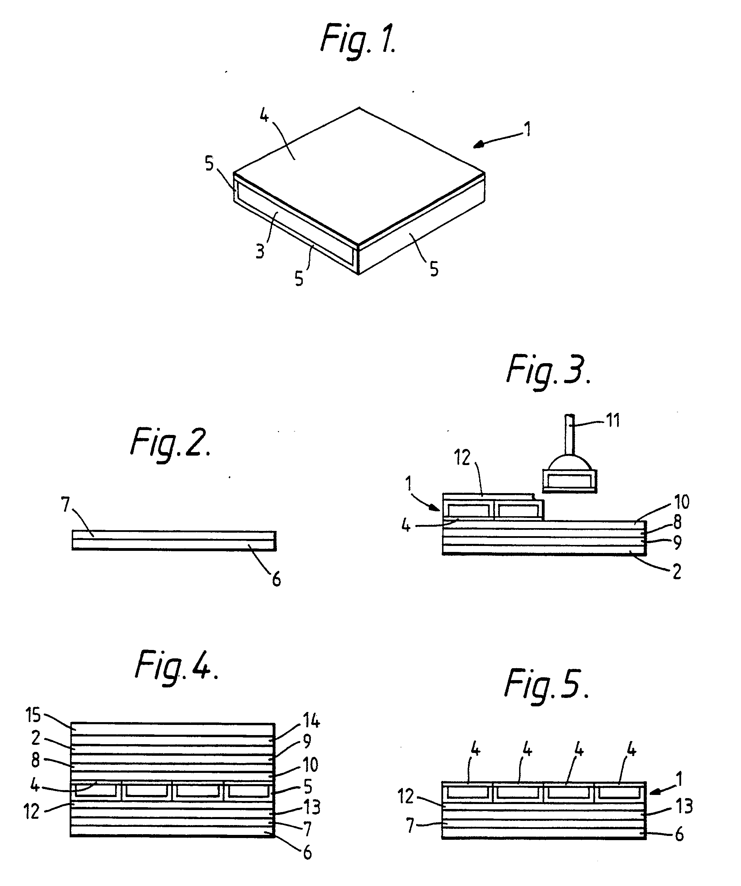

As shown in the accompanying drawing, a process according to the invention for the attachment of second surface mirrors 1 to a surface of a spacecraft basically involves attaching a plurality of tile-like mirrors 1, preferably silvered glass or quartz mirrors, in batches to a prepared surface area of a spacecraft by means of an electrically and thermally conductive adhesive. Each batch is in the form of a plurality of mirrors 1 in closely adjacent side-by-side, edge-to-edge and end-to-end array temporarily adhered to one side of a removable flexible transfer sheet 2. A preferred form of mirror (as shown in Figure 1) utilised in the process of the invention is in the form of a sheet of cerium doped glass coated on the surface thereof, which in use faces away from the spacecraft surface, with Indium Tin Oxide (ITO) 4 and coated on the opposite surface with a silvered nickel-chrome coating 5 which extends around the glass sheet edges into contact with the Indium Tin Oxide coating.

However it is to be understood that the Indium Tin Oxide coating 4 may be omitted for certain uses or cerium doped glass coated with other materials may alternatively be used.

In the process of the invention the spacecraft surface area to which the mirrors are to be attached may be a panel 6 which can be mounted in a turn-over jig (not shown) for convenience. The surface of the panel 6, which may be of an aluminium containing light metal alloy, is cleaned using any suitable degreasing agent such as Iso Propyl Alcohol (IPA) dried, abraded to enhance adhesion of the adhesive and re degreased. Then a thin coat of a primer such as silane dissolved in petroleum naptha (DC 1200 Red) is applied to the cleaned and abraded surface, preferably within three hours of such cleaning, as shown in Figure 2.

An electrically and thermally conductive adhesive, which preferably is room temperature curing, is prepared as follows. Firstly a finely divided metallic powder filler such as silver plated copper sold as CHO-BOND 1029B (Registered Trade Mark) is washed with toluene at least once and preferably three times and subsequently heated, whilst thinly spread out, to facilitate removal of the Toluene. This heating may be done at a temperature greater than 30°C preferably substantially 100°C ± 5°C for a time in the range of from 2 to 4 hours, of which 2 hours may be taken to bring the material to temperature.

Then a room temperature curing low-out gassing silicone rubber adhesive is prepared containing the filler and a curing agent. The adhesive can be in the form of a base compound RTV 566A and a curing agent RTV 566B and is mixed in the proportions 4 parts by weight base compound, to 5 parts by weight prepared filler, to 0.07 per cent by weight curing agent.

Preferably the adhesive is mixed on aluminium foil with the filler being added to the base compound and folded in. Degassing should be carried out under a vacuum in the range of from 990 to 965 mbar until active foaming ceases. The curing agent is then added and mixed and the resulting adhesive mix again degassed under the same conditions as previously set forth.

The mirrors 1 are laid up in reverse orientation on double sided adhesive tape 8, having one side coated with high tack adhesive 9 and the other side coated with low tack adhesive 10, which is mounted on a flexible, preferably plastics, transfer sheet 2 by means of the high tack side. The tape 8 is applied, by the high tack side 9, in strips in rows to the transfer sheet 2 and the mirrors 1 attached to the low tack side of the tape by the Indium Tin Oxide coated surface 4 to form a closely adjacent, side-by-side, edge-to-edge and end-to-end array on the transfer sheet as shown in Figure 3. Preferably a jig or like tool is used to ensure correct orientation of the mirrors 1 and the correct spacing between the mirrors on the transfer sheet 2. For example an array of 84 mirrors made up of 12 side by side rows each containing 7 end to end mirrors, may be provided. For convenience the transfer sheet 2 may be located on a support surface or jig (not shown) during the mirror location and attachment operation and the mirrors 1 may be placed on the adhesive tape 2 by vacuum plunger means 11. The mirrors 1 laid up on the transfer sheet 2 should finally be cleaned and degreased in any convenient way. The silvered nickel-chrome surfaces 5 of the mirrors 1 are then coated with primer 12 such as DC1200 Red as shown in Figure 3.

The prepared adhesive 13 is applied to the cleaned and primed spacecraft surface area 7,6. This may be done by spreading the adhesive 13 to a desired thickness using wires (not shown) having the same diameter as the desired thickness held in a frame. The primed mirror loaded transfer sheet 2 is then positioned over the adhesive and the mirrors lowered into contact with the adhesive 13. A bleed cloth 14 to ensure complete air extraction from under the mirrors 1 is placed over the transfer sheet 2 and a vacuum mat 15 is placed over the bleed cloth 14 as shown in Figure 4. A vacuum is applied in the range of from 999 to 965 mbar to the vacuum mat 15 for at least 45 minutes, the vacuum then reduced to substantially 950 mbar, the vacuum removed and the mat 15 and cloth 14 removed. After about 2 hours the transfer sheet 2 is removed from the adhered mirrors 1, the excess adhesive removed, and the exposed Indium Tin Oxide coated surfaces 4 of the mirrors 1 cleaned and polished after the adhesive has been allowed to cure for 7 days at a temperature in the range of from 20 to 25°C, as shown in Figure 5.

The process may then be repeated as desired for further batches of mirrors 1 on further transfer sheets 2. Repair and replacement of second surface mirrors 1 can be carried out in a similar manner.

## Claims

1. A process for the attachment of second surface mirrors (1) to a surface (6) of a spacecraft, characterised in that the mirrors (1), each in the form of a tile-like sheet of mirror (3) or mirror coated material, are applied to the spacecraft surface (6) in batches, with each batch being in the form of a plurality of said mirrors (1) in closely adjacent side-by-side, edge-to-edge and end-to-end array temporarily adhered to one side of a removable flexible transfer sheet (2).

2. A process for the attachment of second surface mirrors (1) to a surface (6) of a spacecraft, characterised by including the steps of cleaning an area of the spacecraft surface (6), applying a coating of an electrically and thermally conductive adhesive (13) to the cleaned surface area (6), temporarily adhering a plurality of mirrors 1), each in the form of a tile-like sheet or mirror or mirror (3) coated material, to one side of a removable flexible transfer sheet (2) to form a closely adjacent, side-by-side, edge-to-edge and end-to-end array thereon, applying the array of mirrors (1) directly to the adhesive coated surface (6) with the transfer sheet (2) facing away from the surface (6), applying and maintaining a vacuum over said transfer sheet (2) for a time sufficient for the adhesive (13) to cure, and so attach the mirrors (1) to the surface (6) and removing the vacuum and transfer sheet (2) from the mirror attached surface.

3. A process according to Claim 2, in which the spacecraft surface area (6) is in the form of a panel removably attached to substantially rigid support frame.

4. A process according to claim 2 or claim 3, in which, subsequent to cleaning, the spacecraft surface area (6) is coated with a primer(12).

5. A process according to claim 4, in which the spacecraft surface (6) is made of Aluminium containing light metal alloy and the primer (12) applied is Silane dissolved in petroleum naptha.

6. A process according to any one of claims 2 to 5, in which, after cleaning and priming, the adhesive (13) is applied to the spacecraft surface (6) by spreading to a desired thickness using wires, having the same diameter as the desired thickness, held in a frame.

7. A process according to any one of claims 2 to 6, in which the adhesive (13) utilised is a low out gassing silicone rubber adhesive containing a curing agent and an electrically conductive filler.

8. A process according to claim 7, in which the adhesive (13) cures at substantially room temperature.

9. A process according to claim 7 or claim 8, in which the electrically conductive filler is finely divided metal powder.

10. A process according to claim 9, in which the finely divided metal powder is silver plated copper powder.

11. A process according to claim 10, in which the silver plated copper powder is CHO-BOND 1029B (Registered Trade Mark) which has been washed at least once in Toluene and subsequently heated, whilst spread out, to facilitate removal of the Toluene.

12. A process according to claim 11, in which the heating is carried out at a temperature greater than 30°C for a time in the range of from 2 to 4 hours.

13. A process according to claim 12, in which the heating is carried out at a temperature of substantially 100°C.

14. A process according to any one of claims 2 to 13, in which the mirrors (1) are silvered glass or quartz sheets.

15. A process according to claim 14, in which each mirror (1) is a sheet of cerium doped glass (3) coated on the surface (4) thereof, which in use faces away from the spacecraft surface, with Indium Tin Oxide and coated on the opposite surface (5) with a silvered nickel-chrome coating which extends around the glass sheet edges into contact with the Indium Tin Oxide coating.

16. A process according to any one of claims 2 to 15, in which the flexible transfer sheet (2) is made of plastics material, rows of strips of double sided adhesive tape (8) having one side coated with high tack adhesive (9) and the other side coated with low tack adhesive (10) are adhered to the transfer sheet (2) by the high tack side and the mirrors (1) are adhered to the low tack side of the adhesive tape (8) in the desired array.

17. A process according to claim 16 when appended to claim 15, in which the Indium Tin Oxide coated surfaces (4) of the mirrors (1) are adhered to the low tack side (10) of the adhesive tape (8).

18. A process according to claim 16 or claim 17, in which the surfaces (5) of the mirrors (1) facing away from the transfer sheet (2) are coated with a primer (12).

19. A process according to claim 18, in which the primer (12) utilised is Silane dissolved in petroleum naptha.

20. A process according to claim 19, in which the transfer sheet (2) is applied to the adhesive coated spacecraft surface (6) until the primer coated surfaces of the mirrors (1) contact the adhesive (13), a vacuum mat (15) is placed over the transfer sheet (2) and a vacuum in the range of from 999 to 965 mbar is applied to the vacuum mat (15) for at least 45 minutes.

21. A process according to claim 20, in which after 45 minutes the vacuum is reduced to substantially 950 mbar and the vacuum mat (15) removed from the transfer sheet (2).

22. A process according to claim 21, in which approximately 2 hours after vacuum mat removal, the transfer sheet (2) and double sided adhesive tape (8) are removed from the mirrors (1) and excess adhesive removed.

23. A process according to claim 22, in which the mirror surfaces (4) facing away from the spacecraft surface (6) are cleaned and polished after the adhesive (13) has been cured for approximately 7 days at a temperature in the range of from 20 to 25°C.

24. A process according to any one of claims 2 to 23, in which a plurality of mirror arrays are attached to the spacecraft surface (6) by a plurality of transfer sheets (2).

25. A spacecraft panel (6), characterised by having a surface coated with second surface mirrors (1), by the process according to any one of claims 1 to 24.

Fig. 1.

Fig. 2.

Fig. 3.

Fig. 4.

Fig. 5.